(19)

Europäisches
Patentamt
European
Patent Office
Office européen
des brevets

(11) **EP 1 895 411 A1**

(12) **EUROPEAN PATENT APPLICATION**

(43) Date of publication:
**05.03.2008 Bulletin 2008/10**

(51) Int Cl.:
**G06F 9/46** (2006.01)

(21) Application number: **06017662.5**

(22) Date of filing: **24.08.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **SIEMENS AKTIENGESELLSCHAFT 80333 München (DE)**

(72) Inventors:
• **Berbner, Rainer**
  **64283 Darmstadt (DE)**
• **Grimminger, Jochen**
  **80638 München (DE)**
• **Zaid, Farid**
  **84539 München (DE)**

(54) **Method and system for execution of a process**

(57)     A method for execution of a process having several interlinked tasks, wherein for each task said method comprises the following steps: invoking for said task a corresponding webservice using cached output data of a preceding task as input data of said webservice and concurrently invoking a webservice corresponding to said preceding task to generate actual output data of said preceding task; comparing the cached output data of said preceding task with the generated actual output data of said preceding task and, if they match, performing the step of storing output data generated by the invoked webservice as cached output data of the task in a cache memory.

FIG 10

For each task $t_n$:

START — S0

Get cached output data of $WS_{n-1}$ as input data for $WS_n$ — S1

Run webservices $WS_n$ and $WS_{n-1}$ — S2

Compare cached output data of $WS_{n-1}$ with the real actual output data of the run webservice $WS_{n-1}$ — S3

Match? — S4

yes → Cache output data of webservice $WS_n$ in memory — S5

no → Run webservice $WS_n$ again with actual output data of $WS_{n-1}$ as input data for $WS_n$ — S6

S7 — Cache output data of $WS_n$ in memory

STOP — S8

EP 1 895 411 A1

**Description**

TECHNICAL BACKGROUND

The invention refers to a method and a system for execution of a process comprising several tasks. These tasks are executed by invoking a corresponding webservice.

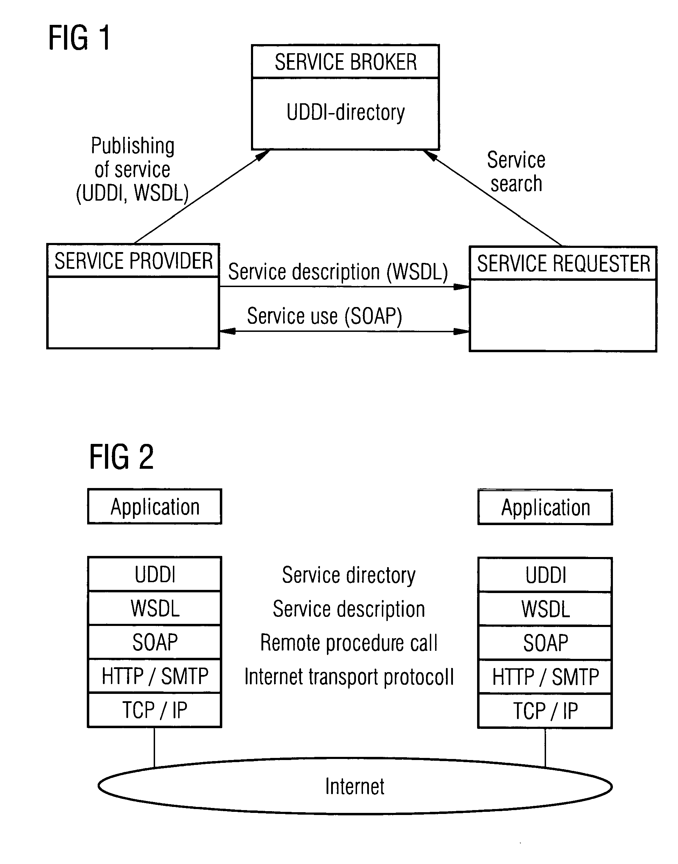

Figure 1 illustrates an interaction of a service provider, a service broker and a service requestor over a network when using web services. A service provider describes his service by means of the web service descriptor using WSDL. This description of his service is published by storing the WDSL web service descriptor in a public UDDI directory (UDDI: Universal Description Discovery and Integration) of a service broker. A service requesting user searches in the UDDI directory of the service broker for services he needs. When the user finds a service which he likes to use, he communicates directly via SOAP (Simple Object Access Protocol) with the service provider. SOAP is a protocol for exchanging XML-based messages over a computer network, such as the Internet. The most common messaging pattern of SOAP is a remote procedure call (RPC) pattern where a first network node, i. e. client, sends a request message to another node, i. e. server. The server immediately sends a response message to the client. UDDI is a platform independent, XML-based registry for service providers to list themselves on the Internet. The UDDI business registration consists of three components, i. e. so-called "White Pages" giving information about the service provider, the so-called "Yellow Pages" listing and describing the provided services and the so-called "Green Pages" giving technical information about services exposed by the service provider. UDDI is designed to be interrogated by SOAP messages and provide access to WSDL documents describing the protocol bindings and message formats required to interact with the web services listed in the UDDI directory. UDDI enables application to look up web service information in order to determine whether to use them. Software application written in various programming languages and running on various platforms can use web services to exchange data over a computer network like the Internet in a manner similar to inter-process communication on a single computer. This inter-operability, for example, between Java and Phyton, or Microsoft Windows and Linux Application, is due to the use of open standards.

Figure 2 shows a layer model of said web services. The basic layer is the TCP/IP layer followed by the Internet transport protocols HTTP/SMTP. Messages which are relevant for the application use the SAOP protocol for remote function calls being encoded in XML. Since any web service can offer different functions, WDSL provides in the next layer a description of the service for application programs. The access to the web services is made possible by use of the UDDI directories which are provided for predetermined services.

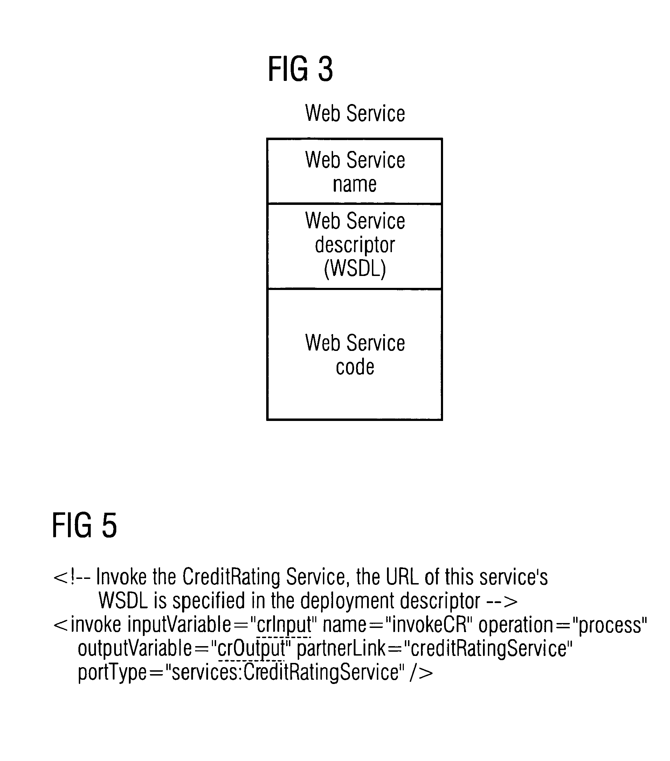

Figure 3 shows schematically a web service. A web service comprises a web service name for identifying the web service, a web service descriptor for describing the function of that web service and, finally, an executable web service programme code.

A service oriented architecture (SOA) is a software architecture, in which an application functionality is encapsulated as independent services. These services are in many cases web services. Clients in different applications or business processes can then consume these services. Service oriented architecture (SOA) de-couples the implementation for a software service from the interfaces that call the service. This lets clients of a service rely on a consistent interface regardless of the implementation technology of the service. By far the most common type of service used in a service oriented architecture (SOA) is the web service. To orchestrate a set of web services into a business process requires either writing a great deal of low level code or the use of a business process execution language (BPEL).

Figure 4 shows an example of a process defind in a business process execution language (BPEL). In the given example a BPEL process flow consists of different web services, referred to as partner links which compares loan rate values returned from the services to determine the lowest one.

Figure 5 shows an example of an invokation of a remote web service.

Figure 6 shows an example of a process model illustrating the problem underlying the present invention. In the given example the process which can be a technical process or a business process comprises several tasks wherein the execution of each task involves an invokation of corresponding webservice via a network. The executed process may for example be a process for evaluating a credit inquiry of a client by a server of a financial institute such as a bank.

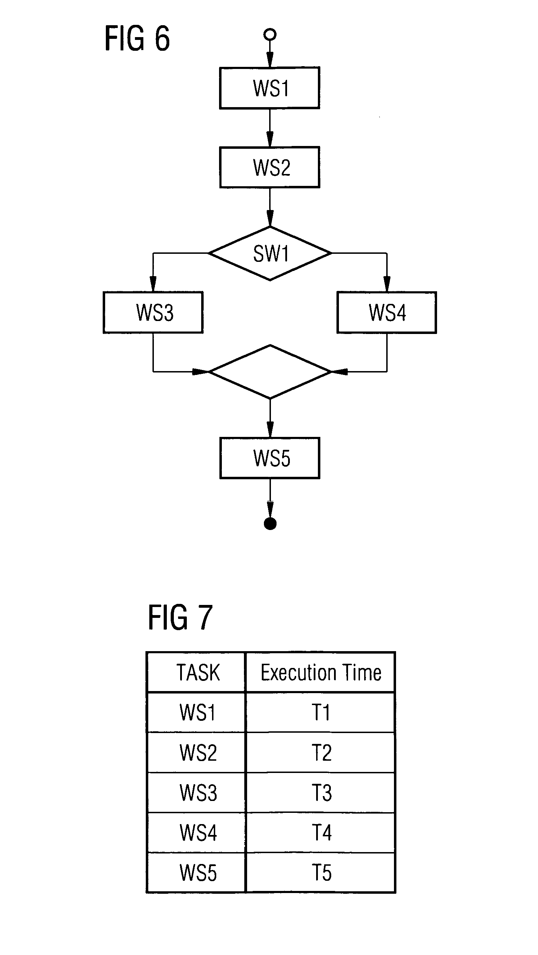

After starting the process as a first task T1 an inquiry is performed whether the user or client of the bank interested in receiving a credit from a bank has a good record as a debitor in the past. If the client of the bank agrees the bank server will invoke a webservice WS1 from a webservice provider returning a record of the client indicating that the client has shown in the past that he can be trusted to pay back his credit or indicating that the client is on a black list of untrusted clients. The corresponding web service T1 is invoked by the process via a network from a webservice provider such as the so called SCHUFA-service in Germany. The next task T2 of the process shown in Fig. 6 comprises for instance the evaluation of financial assets of the client.

This can also be done by invoking a remote webservice from a webservice provider.

After the completion of the first two tasks T1, T2 it is decided whether to give a credit to the client or not. In case that is has been indicated that the client is not on a black list and the evaluation of his financial assets has shown that the client provides enough safety for the bank in a task T3 a client profile is created and all necessary documents for giving the required bank credit to him are prepared. This is done by invoking a further webservices WS3. Contrary, when the client is on a black list or his financial assets are not sufficient to give the requested bank credit to him, rejection documents are prepared in a task T4 by invoking a further webservice WS4.

In a task T5 the prepared documents are sent to the client by invoking a webservice WS5.

The execution of a webservice needs a predetermined run time. The table shown in Fig. 7 shows an estimated execution time for each individual webservice WS.

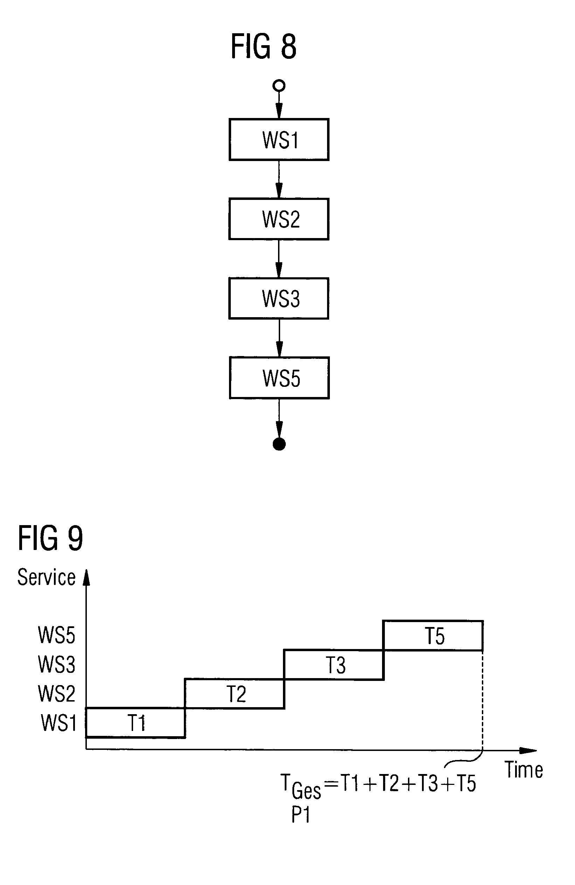

The process shown in Fig. 6 has two different possible execution paths P1, P2, i.e. a first execution path P1 consisting of tasks T1, T2, a switching step SW1 and task T3, T5. The alternative execution path P2 consists of tasks T1, T2, the switching step SW1 and tasks T4 and T5. Fig. 8 shows the first execution path P1 of the process shown in Fig. 6.

When the invocation of the corresponding web services WS1, WS2, WS3, WS5 of the execution path P1 is performed sequentially the execution time of the completed process is given by the sum of all execution times of the invoked webservices WS along the execution path as shown in Fig. 9.

For example the execution time $T_{P1}$ for execution path P1 is given by:

$$T_{P1} = T1 + T2 + T3 + T5.$$

In a conventional method a webservice WS is executed in the same order as described in a workflow script. A webservice is not executed before it receives the output data of its preceding webservice. For instance, webservice WS2 shown in Fig. 6 - 9 is executed after receiving output data from the webservice WS1. Since in many typical situations the data output by a webservice WS are valid for a relative long time many invocations $I_{WS}$ of webservices WS are redundant and cause overhead in terms of computational power, network bandwidth and process response time. If is quite likely that a client of a bank who is on a black list indicating that he did not pay back his debts in the past is still on this black list the next time when the process is run.

Accordingly it is one object of the present invention to provide a method and a system for execution of a process having several tasks invoking a corresponding webservice wherein the number of invocations is minimized.

SUMMARY OF THE INVENTION

The invention provides a method for execution of a process comprising several tasks each task being executable by invoking a corresponding webservice, wherein output data of an executed task are stored in a memory as input data for other tasks of said process.

In the method according to the present invention the number of invocations of webservices in minimized by using a caching mechanism.

In a preferred embodiment of the method according to the present invention for each task the method comprises the following steps:

(a) invoking for said task ($T_n$) a corresponding webservice ($WS_n$) using cached output data of a preceding task ($T_{n-1}$) as input data of said webservice ($WS_n$) and concurrently invoking a webservice ($WS_{n-1}$) corresponding to said preceding task ($T_{n-1}$) to generate actual output data of said preceding task ($T_{n-1}$);

(b) comparing the cached output data of said preceding task ($T_{n-1}$) with the generated actual output data of said preceding task ($T_{n-1}$) and, if they match, performing the step of:

(c) storing output data generated by the invoked webservice ($WS_n$) as cached output data of the task ($T_n$) in a cache memory.

In a preferred embodiment of the method according to the present invention, when the cached output data of said preceding task ($T_{n-1}$) and the generated actual output data of said preceding task ($T_{n-1}$) do not match the webservice ($WS_n$) corresponding to the task ($T_n$) is invoked again using the actual output data of said preceding tasks ($T_{n-1}$) as input data of said webservice ($WS_n$).

In an embodiment of the method according to the present invention the output data of the webservice $WS_n$ is stored as cached output data of the task $T_n$ in the cached memory.

In an embodiment of the method according to the present invention the webservices are invoked via a network from a webservice provider.

In an embodiment of the method according to the present invention the webservices are invoked via a network from a webservice provider.

In an embodiment of the method according to the present invention the webservices, WSN, WSN-1 are invoked using a SOAP protocol (simple object axis protocol).

In an embodiment of the method according to the present invention each webservice comprises a webservices name, a webservice descriptor for describing a function of said webservice, and an executable webservice program code.

In a preferred embodiment of the method according to the present invention the webservice descriptor describes a function of that webservice in a webservice description language WSDL.

In an embodiment of the method according to the present invention the webservice descriptor is stored in a UDDI (Universal description discovery integration) directory.

In an embodiment of the method according to the present invention the network is formed by the internet.

In an alternative embodiment of the method according to the present invention the network is formed by an enterprise network.

In one embodiment of the method according to the present invention the process comprises different possible execution paths.

In an embodiment of the method according to the present invention an execution history of executed tasks of the process is stored.

In a preferred embodiment of the method according to the present invention a prediction is performed which task will be executed next on the basis of the stored execution history.

The invention further provides an apparatus for executing a process having several tasks, each task being executed by invoking a corresponding webservice, wherein said apparatus comprises a cache memory for storing output data of the invoked webservice as input data for other tasks of said process.

The invention further provides an apparatus for executing a process having several interlinked tasks comprising:

(a) means for invoking for a task ($T_n$) a corresponding webservice ($WS_n$) using cached output data of a preceding task ($T_{n-1}$) as input data of said webservice ($WS_n$) and for concurrently invoking a webservice ($WS_{n-1}$) corresponding to said preceding task ($T_{n-1}$) to generate actual output data of said preceding task ($T_{n-1}$) ;

(b) means for comparing cached output data of said preceding task ($T_{n-1}$) with the generated actual output data of said preceding task ($T_{n-1}$); and

(c) means for storing output data generated by the invoked webservice ($WS_n$) as cached output data of said task ($T_n$) in a cache memory, when the cached output data of said preceding task ($T_{n-1}$) and the generated actual output data of said preceding task ($T_{n-1}$) do match with each other.

## THE BRIEF DESCRIPTION OF THE FIGURES

In the following preferred embodiments of the method and the system for execution of a process comprising several tasks are described with reference to the enclosed figures.

Fig. 1 shows interaction of a webservice provider, a service program a service requester of an network according to the state of the art;

Fig.2 shows a conventional layer model of a webservice;

Fig. 3 shows a data format of a conventional webservice;

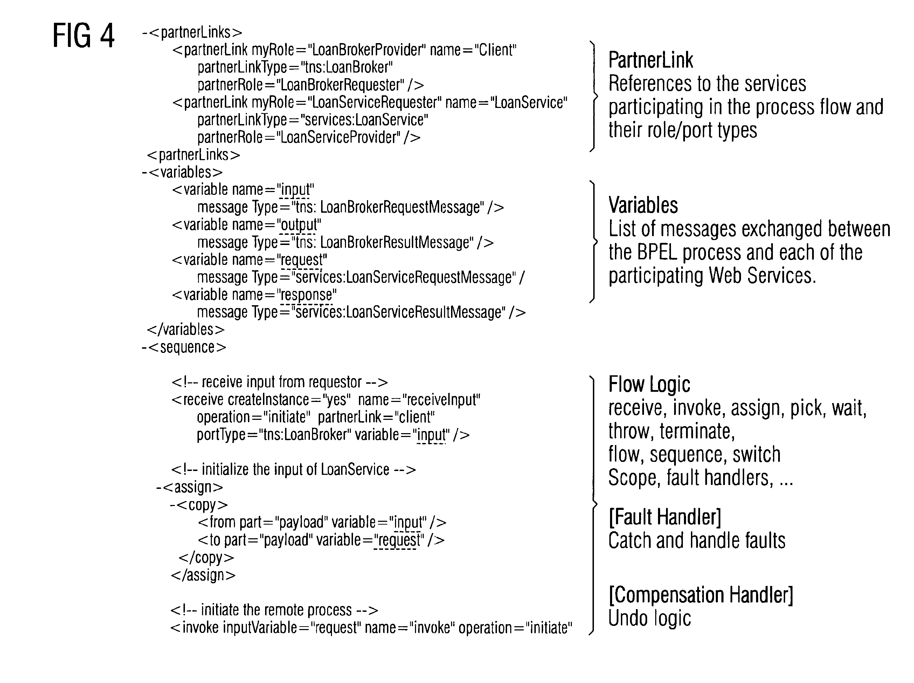

Fig. 4 shows an example of a process described in a BPEL-language according to the state of the art;

Fig. 5 shows an example of an invocation of a webservice according to the state of the art;

Fig. 6 shows an exemplary process for illustrating the problem underlying the present invention;

Fig. 7 shows a table of an execution time of webservices invoked by the exemplary process shown in Fig. 6;

Fig. 8 shows possible execution paths within the exemplary process shown in Fig. 6;

Fig. 9 shows a diagram of the execution time of an execution path shown in Fig. 8;

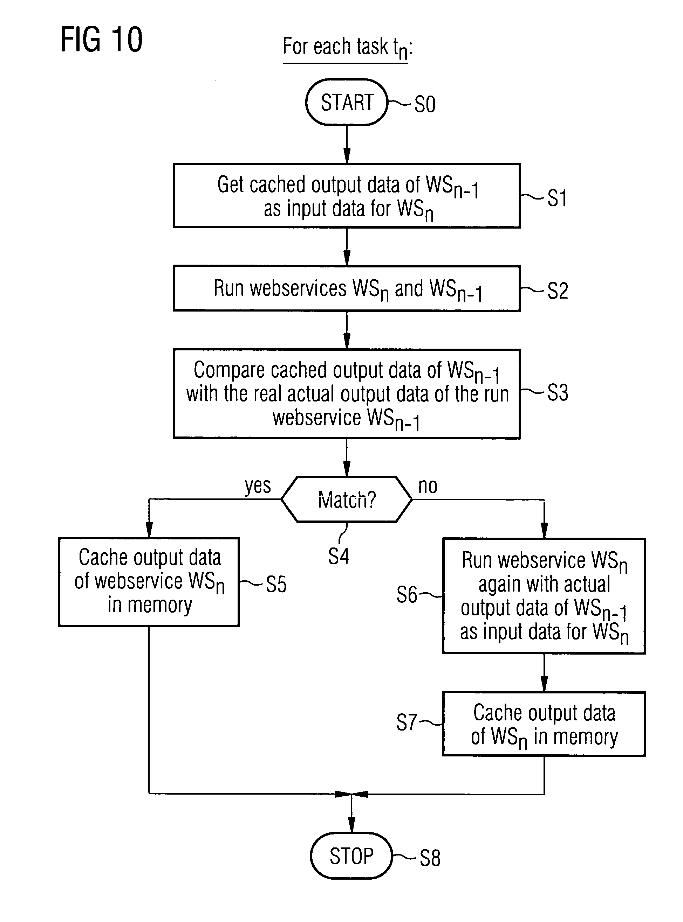

Fig. 10 shows a flowchart of an embodiment of method for execution of the process according to the present invention;

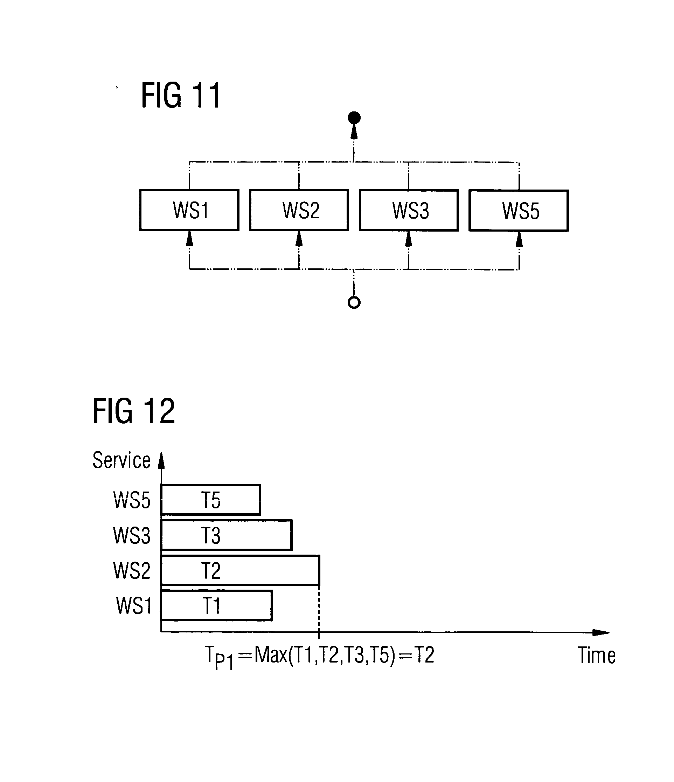

Fig. 11 shows a diagram for illustrating the method according to the present invention for the exemplary process shown in Fig. 6;

Fig. 12 shows a diagram for illustrating the execution time of the method according to the present invention for the exemplary process shown in Fig. 6.

In the method according to the present invention for execution of a process comprising several tasks T output data of an executed task are stored in a memory, i.e. a cache memory, as input data for other tasks T of the same process. In the method according to the present invention caching of data is used as state information during the workflow execution, i.e. to store output data of one webservice invocation is stored and used as input data to invoke the next webservice according to the workflow order. The output data of an invoked webservice WS can be cached for a certain time, e.g. within a validity time and the webservice WS is not re-invoked within this validity time, but the cached output data is reused to invoke the next webservice as specified by the workflow.

As can be seen from the flowchart of Fig.10 for each task $T_n$ within a process, e.g. a technical or business process after a starting step $S_0$ in step $S_1$ cached output data of a webservice $WS_{n-1}$ for a preceding task $T_{n-1}$ is read as input data for the invoked webservice $WS_n$ for the actual task $T_n$. When executing the task $T_n$ the corresponding webservice $WS_n$ using cached output data of the preceding task $T_{n-1}$ is used as input data for the webservice $WS_n$. The webservice $WS_{n-1}$ corresponding to the preceding task $T_{n-1}$ is invoked to generate actual output data of the preceding task $T_{n-1}$. Then the webservice $WS_n$ of the current task $T_n$ and the webservice $WS_{n-1}$ of the preceding task $T_{n-1}$ are executed in step S2.

In step S3 cached output data of webservice $WS_{n-1}$ is compared with the actual output data of the executed webservice $WS_{n-1}$. In step S4 it is decided whether actual output data of the executed webservice $WS_{n-1}$ and the cached output data of this webservice $WS_{n-1}$ stored in a memory do match. If the data match the output data generated by the invoked webservice $WS_n$ are stored as cached output data of the task $T_n$ in the cache memory in step S5.

In contrast when the cached output data of the preceding task $T_{n-1}$ and the generated actual output data of the preceding task $T_{n-1}$ do not match the webservice $WS_n$ corresponding to the actual task $T_n$ is invoked again in step S6 using the actual output data of the preceding task $T_{n-1}$.

Further in a step S7 the output data of the webservice $WS_n$ invoked by the actual task $T_n$ is stored as cached output data of the task $T_n$ in the cache memory.

The process stops in step S8

If the method according to the present invention redundant invocations of the webservices WS are eliminated reducing the overhead in terms of computational power, network bandwidth and process response time.

Fig. 11 shows a diagram illustrating the method according to the present invention for the execution path P1 shown in Fig. 8. For execution of webservice WS2 the method according to the present invention uses the cached output data of webservice WS1 stored in a memory. In this way, webservice WS2 is executed concurrently with webservice WS1. Then the cached output data of webservice WS1 is compared with the real actual output data of the executed webservice WS1. If both data do match then the concurred execution of webservice WS2 is correct and the execution time is equal to the execution time T1 of webservice WS1.

Fig. 12 shows a diagram of the complete execution time of the execution path P1 shown in Fig. 1 under ideal circumstances. The execution time $T_{P1}$ of the execution path P1 is given by the maximum execution time of all involved webservices WS1, WS2, WS3, WS5 and in the given example is identical to the execution time TS2 of the longest lasting webservice WS2. With the caching data of a parallel computing mechanism according to the present invention the estimated total execution time for execution of a path P is given by the maximum among all execution times of all involved wevservices along the execution path P. The time gain may be defined as a ratio between the total time for execution without caching a parallel execution and the total time execution with caching a parallel execution.

```
Time gain = total time without caching a parallel execution /
total time with caching a parallel execution = T1+T2+T3+T5 /
max (T1, T2, T3, T5) > 100 %.
```

In the preferred embodiment of the method according to the present invention an execution history of executed task T of the process is stored. This makes it possible to observe an execution pattern of execution path P or any workflow instance based on the inputs and output of interacting partners. Accordingly it becomes possible to predict which task T is executed next based on the execution history. A prediction is performed which task T will be executed next on the basis of the stored execution history. For example when running a process as shown in Fig. 6 the execution history may show that a first execution path P1 including the webservice WS3 is much likelier to be performed than an execution path P2 including webservice WS4. The execution history may for example show that only few clients are on a credit black list and do not have the necessary assets for receiving the bank credit. Using the execution history facilitates using the cached output data of a task T as input for a following task. In this way a response time of a workflow instance can be further reduced. In one embodiment of the method according to the present invention the webservices WS are invoked from a remote webservice provider via a network. This network may be formed in one embodiment by the internet and in an alternative embodiment by an enterprise network. In one embodiment of the system according to the present invention each webservice WS comprises a webservice name, a webservice descriptor describing a function of the webservice WS and an executable webservice program code. In a possible embodiment of the method according to the present invention the webservice descriptor describes a function of the webservice in a webservice description language WSDL. In a first embodiment the method according to the present invention the webservice descriptor is stored in a UDDI (Universal description discovery integration) directory. The UDDI directory may be used to store the descriptor itself or simply a URL referencing the descriptor.

A variety of techniques can be used to find out webservices whose output data is relevant for caching and for how long could the data can be cached. For example, the output data of a webservice which returns the temperature of a location might be cached longer than the output data of a stock exchange webservice. The method according to the present invention combines parallel computing of webservices with a caching mechanism to minimize the execution time of a process comprising several tasks wherein each task T is executed by invoking a corresponding webservice via a network.

## Claims

1. A method for execution of a process comprising several tasks each task being executable by invoking a corresponding webservice,
   wherein output data of an executed task are stored in a memory as input data for other tasks of said process.

2. A method for execution of a process having several inter-linked tasks,
   wherein for each task said method comprises the following steps:

   (a) invoking for said task a corresponding webservice using cached output data of a preceding task as input data of said webservice and concurrently invoking a webservice corresponding to said preceding task to generate actual output data of said preceding task;
   (b) comparing the cached output data of said preceding task with the generated actual output data of said preceding task and, if they match, performing the step of:
   (c) storing output data generated by the invoked webservice as cached output data of the task in a cache memory.

3. The method according to claim 2,
   wherein, when the cached output data of said preceding task and the generated actual output data of said preceding task do not match the webservice corresponding to the task is invoked again using the actual output data of said preceding tasks as input data of said webservice.

4. The method according to claim 3,
   wherein the output data of the webservice is stored as cached output data of said task in said cache memory.

5. The method according to claim 2,
   wherein said webservices are invoked via a network from a webservice provider.

6. The method according to claim 5,
   wherein said webservices are invoked using a SOAP-protocol (Simple Object Access Protocol).

7. The method according to claim 2,
   wherein each webservice comprises:

   the webservice name,
   a webservice descriptor for describing a function of said webservice, and

an executable webservice program code.

8. The method according to claim 7,
   wherein the webservice descriptor describes a function of said webservice in a webservice description language.

9. The method according to claim 7,
   wherein the webservice descriptor is stored in a UDDI (Universal Description Discovery Integration) directory.

10. The method according to claim 5,
    wherein the network is formed by the Internet.

11. The method according to claim 2,
    wherein the process comprises different possible execution paths.

12. The method according to claim 11,
    wherein an execution history of executed tasks of said process is stored.

13. The method according to claim 12,
    wherein a prediction is performed which task will be executed next on the basis of the stored execution history.

14. An apparatus for executing a process having several tasks, each task being executed by invoking a corresponding webservice, said apparatus
    comprising a cache memory for storing output data of an invoked webservice as input data for other tasks of said process.

15. An apparatus for executing a process having several inter-linked tasks comprising:

    (a) means for invoking for a task a corresponding webservice using cached output data of a preceding task as input data of said webservice and for concurrently invoking a webservice corresponding to said preceding task to generate actual output data of said preceding task;
    (b) means for comparing cached output data of said preceding task with the generated actual output data of said preceding task and
    (c) means for storing output data generated by the invoked webservice as cached output data of said task in a cache memory, when the cached output data of said preceding task and the generated actual output data of said preceding task do match with each other.

16. The apparatus according to claim 15, wherein said invocation means invoke the webservice corresponding to the task again using the actual output data of said preceding task as input data of said webservice if the cached output data of said preceding task and the generated actual output data of said preceding task do not match with each other.

17. The apparatus according to claim 15,
    wherein said webservices are invoked by said invocation means via a network from a webservice provider.

18. The apparatus according to claim 17,
    wherein said webservices are invoked by said invocation means using a SOAP-protocol (Simple Object Access Protocol).

19. The apparatus according to claim 17,
    wherein said network is formed by the Internet.
    The network may be an enterprise network, not necessarily Internet.

20. The apparatus according to claim 17,
    wherein said network is formed by an enterprise network.

## FIG 1

```
          ┌──────────────────────┐
          │    SERVICE BROKER    │
          ├──────────────────────┤
          │    UDDI-directory    │
          └──────────────────────┘
```

Publishing
of service
(UDDI, WSDL)

Service
search

```
┌──────────────────────┐                              ┌──────────────────────┐
│   SERVICE PROVIDER   │  Service description (WSDL)   │  SERVICE REQUESTER   │
│                      │ ──────────────────────────►  │                      │
│                      │     Service use (SOAP)        │                      │
│                      │ ◄──────────────────────────► │                      │
└──────────────────────┘                              └──────────────────────┘
```

## FIG 2

| ┌─────────────┐ | | ┌─────────────┐ |
| Application | | Application |

| | | |
|---|---|---|
| UDDI | Service directory | UDDI |
| WSDL | Service description | WSDL |
| SOAP | Remote procedure call | SOAP |
| HTTP / SMTP | Internet transport protocoll | HTTP / SMTP |
| TCP / IP | | TCP / IP |

Internet

# FIG 3

Web Service

| Web Service name |
| --- |
| Web Service descriptor (WSDL) |
| Web Service code |

# FIG 5

```
<!-- Invoke the CreditRating Service, the URL of this service's
     WSDL is specified in the deployment descriptor -->
<invoke inputVariable="crInput" name="invokeCR" operation="process"
    outputVariable="crOutput" partnerLink="creditRatingService"
    portType="services:CreditRatingService" />
```

**FIG 4**

```
-<partnerLinks>
    <partnerLink myRole="LoanBrokerProvider" name="Client"
        partnerLinkType="tns:LoanBroker"
        partnerRole="LoanBrokerRequester" />
    <partnerLink myRole="LoanServiceRequester" name="LoanService"
        partnerLinkType="services:LoanService"
        partnerRole="LoanServiceProvider" />
  <partnerLinks>
-<variables>
    <variable name="input"
        message Type="tns: LoanBrokerRequestMessage" />
    <variable name="output"
        message Type="tns: LoanBrokerResultMessage" />
    <variable name="request"
        message Type="services:LoanServiceRequestMessage" /
    <variable name="response"
        message Type="services:LoanServiceResultMessage" />
  </variables>
-<sequence>

    <!-- receive input from requestor -->
    <receive createInstance="yes"  name="receiveInput"
        operation="initiate"  partnerLink="client"
        portType="tns:LoanBroker" variable="input" />

    <!-- initialize the input of LoanService -->
  -<assign>
    -<copy>
        <from part="payload" variable="input" />
        <to part="payload" variable="request" />
      </copy>
    </assign>

    <!-- initiate the remote process -->
    <invoke inputVariable="request" name="invoke" operation="initiate"
```

**PartnerLink**
References to the services
participating in the process flow and
their role/port types

**Variables**
List of messages exchanged between
the BPEL process and each of the
participating Web Services.

**Flow Logic**
receive, invoke, assign, pick, wait,
throw, terminate,
flow, sequence, switch
Scope, fault handlers, ...

**[Fault Handler]**
Catch and handle faults

**[Compensation Handler]**
Undo logic

EP 1 895 411 A1

# FIG 6

```
              ○
              │
              ▼
         ┌─────────┐
         │   WS1   │
         └─────────┘
              │
              ▼
         ┌─────────┐
         │   WS2   │
         └─────────┘
              │
              ▼
          ◇ SW1 ◇
         ╱        ╲
        ▼          ▼
   ┌────────┐   ┌────────┐
   │  WS3   │   │  WS4   │
   └────────┘   └────────┘
        ╲          ╱
         ▼        ▼
           ◇    ◇
              │
              ▼
         ┌─────────┐
         │   WS5   │
         └─────────┘
              │
              ▼
              ●
```

# FIG 7

| TASK | Execution Time |
|------|----------------|
| WS1  | T1             |
| WS2  | T2             |
| WS3  | T3             |
| WS4  | T4             |
| WS5  | T5             |

## FIG 8

```
          ○
          │
          ▼
      ┌────────┐
      │  WS1   │
      └────────┘
          │
          ▼
      ┌────────┐
      │  WS2   │
      └────────┘
          │
          ▼
      ┌────────┐
      │  WS3   │
      └────────┘
          │
          ▼
      ┌────────┐
      │  WS5   │
      └────────┘
          │
          ▼
          ●
```

## FIG 9

Service

WS5
WS3
WS2
WS1  │  T1   │  T2   │  T3   │  T5   │

Time

$T_{Ges} = T1 + T2 + T3 + T5$
P1

# FIG 10

For each task $t_n$:

```
( START )～S0
```

↓

| Get cached output data of $WS_{n-1}$ as input data for $WS_n$ | ～S1 |

↓

| Run webservices $WS_n$ and $WS_{n-1}$ | ～S2 |

↓

| Compare cached output data of $WS_{n-1}$ with the real actual output data of the run webservice $WS_{n-1}$ | ～S3 |

↓

yes ⟵ Match? ⟶ no

S4

| Cache output data of webservice $WS_n$ in memory | ～S5 |

| S6～ | Run webservice $WS_n$ again with actual output data of $WS_{n-1}$ as input data for $WS_n$ |

↓

| S7～ | Cache output data of $WS_n$ in memory |

```
( STOP )～S8
```

# FIG 11

WS1   WS2   WS3   WS5

# FIG 12

Service

WS5 | T5

WS3 | T3

WS2 | T2

WS1 | T1

$T_{P1} = Max(T1, T2, T3, T5) = T2$

Time

European Patent
Office

**EUROPEAN SEARCH REPORT**

Application Number

EP 06 01 7662

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FERNANDEZ J ET AL: "Optimizing Web Services Performance Using Caching" NEXT GENERATION WEB SERVICES PRACTICES, 2005. NWESP 2005. INTERNATIONAL CONFERENCE ON SEOUL, KOREA 22-26 AUG. 2005, PISCATAWAY, NJ, USA,IEEE, 22 August 2005 (2005-08-22), pages 157-162, XP010892561 ISBN: 0-7695-2452-4 * page 3 - page 4 * ----- | 1-20 | INV. G06F9/46 |
| A | US 2005/080930 A1 (JOSEPH JOSHY [US]) 14 April 2005 (2005-04-14) * page 2 - page 4 * ----- | 1-20 | |
| A | FR 2 855 288 A1 (CANON KK [JP]) 26 November 2004 (2004-11-26) * page 7 - page 12; figure 1 * ----- | 1-20 | |
| A | US 2003/200349 A1 (HANSEN JAMES R [US]) 23 October 2003 (2003-10-23) * page 2 - page 4 * ----- | 1-20 | TECHNICAL FIELDS SEARCHED (IPC) |
| A | DEVARAM K ET AL: "SOAP optimization via parameterized client-side caching" PROCEEDINGS OF THE FIFTEENTH IASTED INTERNATION CONFERENCE ON PARALLEL AND DISTRIBUTED COMPUTING AND SYSTEMS ACTA PRESS ANAHEIM, CA, USA, vol. 2, 2003, pages 785-790 vol., XP002410544 ISBN: 0-88986-392-X * page 787 - page 788 * ----- | 1-20 | G06F |

-/--

The present search report has been drawn up for all claims

| Place of search | Date of completion of the search | Examiner |
|---|---|---|
| The Hague | 6 December 2006 | Härdeman, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

## EUROPEAN SEARCH REPORT

Application Number

EP 06 01 7662

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | K. DEVARAM AND D. ANDRESEN: "SOAP Optimization via Client-Side Caching" PROCEEDINGS OF THE FIRST INTERNATIONAL CONFERENCE ON WEB SERVICES (ICWS'03), [Online] 24 June 2003 (2003-06-24), - 27 June 2003 (2003-06-27) pages 520-524, XP002410545 Retrieved from the Internet: URL:http://www.cis.ksu.edu/~dan/despot/icws03.pdf> [retrieved on 2006-11-03] * page 521 - page 522 * ----- | 1-20 | |
| A | VENKATESH PRASAD RANGANATH, DAVID M. SEXTON, DANIEL A. ANDRESEN: "LYE: HIGH-PERFORMANCE SOAP WITH MULTI-LEVEL CACHING" PROCEEDINGS OF 16TH IASTED INTERNATIONAL CONFERENCE ON PARALLEL AND DISTRIBUTED COMPUTING AND SYSTEMS (PDCS), [Online] 2004, pages 1-6, XP002410546 Retrieved from the Internet: URL:http://www.cis.ksu.edu/~rvprasad/publications/pdcs04.pdf> [retrieved on 2006-11-06] * page 2 - page 4 * ----- | 1-20 | TECHNICAL FIELDS SEARCHED (IPC) |

The present search report has been drawn up for all claims

| Place of search | Date of completion of the search | Examiner |
|---|---|---|
| The Hague | 6 December 2006 | Härdeman, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 06 01 7662

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2006

| Patent document cited in search report | | Publication date | Patent family member(s) | | Publication date |
|---|---|---|---|---|---|
| US 2005080930 | A1 | 14-04-2005 | CN<br>EP<br>WO | 1867898 A<br>1683013 A1<br>2005041035 A1 | 22-11-2006<br>26-07-2006<br>06-05-2005 |
| FR 2855288 | A1 | 26-11-2004 | US | 2004236732 A1 | 25-11-2004 |
| US 2003200349 | A1 | 23-10-2003 | AU<br>WO | 2003230937 A1<br>03090078 A2 | 03-11-2003<br>30-10-2003 |

EPO FORM P0459

For more details about this annex : see Official Journal of the European Patent Office, No. 12/82